# EUROPEAN PATENT APPLICATION

(11) **EP 4 778 697 A1**
(43) Date of publication of application: **22.07.2026**
(21) Application number: 25152340.3
(22) Date of filing: 16.01.2025
(51) Int. Cl.: B29C 51/22, B29C 51/10, B29C 51/36, B29C 33/30

(54) **ASSEMBLY FOR MANUFACTURING WATER-SOLUBLE POUCHES**

(71) Applicant: The Procter & Gamble Company, Cincinnati, OH 45202 (US)
(72) Inventor: BRANDT SANZ, Miguel, 1853 Strombeek-Bever (BE); CHARALAMBIDES, Tasos, 1853 Strombeek Bever (BE)
(74) Representative: Plasseraud IP

(57) **Abstract**

Examples relate to a drum assembly (10) for manufacturing water-soluble pouches, the drum assembly (10) comprising: a base drum (12) configured to rotate around a central axis (A), a plurality of shell segments (14) detachably mounted to the base drum (12) collectively forming a cylindrical outer molding surface (16) around the circumference of the base drum (12); wherein the outer molding surface (16) comprises a plurality of mold cavities (18), each mold cavity (18) being configured to define one or more compartments in the water-soluble pouches, and wherein each shell segment (14) covers an angular portion of the circumference of the base drum (12) preferably comprised in a range of 20° to 120°, more preferably 30° to 90°, and most preferably around 60°.

## Description

### Technical Field

The present disclosure relates to the manufacturing of water-soluble pouches.

### Background Art

Systems and methods for producing water-soluble pouches typically employ a series of mechanical and automated processes, including film handling, cavity forming, filling, sealing, extracting and cutting. The water-soluble pouches produced are commonly used for containing a pre-measured amount of detergent or fabric softener, and are vastly encountered in the fields of washing machines or dishwashers.

### Brief Description of Drawings

Figure 1 shows an example of a drum assembly for manufacturing water soluble pouches.
Figure 2A, 2B and 2C show examples of shell segments in an unwrapped view which may be used for example in the drum assembly of figure 1.
Figures 3A and 3B show further examples of shell segments in an unwrapped view which may be used for example in the drum assembly of figure 1.
Figures 4A and 4B show examples of a base drum in an unwrapped view which may be used for example in the drum assembly of figure 1.
Figure 5 shows another example of a drum assembly for manufacturing water-soluble pouches.
Figures 6A and 6B show examples of a spacer in an unwrapped view which may be used for example in the drum assemblies of figures 1 or 5.
Figure 7 shows an example of a system in a side view for manufacturing water-soluble pouches.
Figures 8A and 8B show examples of water-soluble pouches.
Figure 9 illustrates an example of a method for transforming a first drum assembly into a second drum assembly.
Figure 10 illustrates an example of a method for producing water-soluble pouches.

### Description of Embodiments

An important component in a system for producing water-soluble pouches is the mold cavity, which determines the shape, size, and volume of the water-soluble pouch. Mold cavities, formed as recesses in a mold plate or a drum, shape water-soluble film into the desired configuration. Such desired configuration encompasses filling capacity, sealing integrity, and functional properties such as solubility and durability.

A challenge when manufacturing water-soluble pouches arises when there is a need to change the mold cavities. This may occur when switching to different product lines, each requiring pouches of distinct shape, size and/or volume. For example, a first water-soluble pouch may need to hold a specific volume, while a second water-soluble pouch might require a completely different shape for precise dispensing, or a third water soluble pouch may require a compartment filled with laundry detergent and a separate compartment for holding fabric softener. Such variations involve replacing or adjusting the mold cavities to meet the specific design requirements of the water-soluble pouches of each product line.

Switching mold cavities can involve manual intervention and recalibration to change the mold cavities and align them with other operations of the system, such as filling and sealing. This changeover can be time-consuming and labour-intensive, resulting in extended down-times, reduced production efficiency and increased operational costs. Additionally, errors in the changeover process can lead to defects in the finished water-soluble pouches, causing further inefficiencies and material waste.

In some production systems, at least some of the mold cavities are located on a rotating drum assembly. However, in such cases, the drum assembly may be surrounded by other system components, such as film feeding devices, filling units, sealing devices and extraction devices. Such an arrangement makes the drum assembly difficult to access for changeover operations. Limited accessibility further complicates the process of replacing or modifying mold cavities, contributing to extended downtimes and operational inefficiencies.

In such production systems, switching the mold cavities may involve removing and replacing an entire drum. This operation not only requires the manual intervention and recalibration described above, but also poses additional space constraints on the water-soluble pouch manufacturing system. Sufficient space must be available to facilitate drum replacement and to store the replacement drums. Thus, in addition to the extended down-times, reduced production efficiency and increased operational costs, overall capital costs are increased.

The present disclosure addresses this situation and aims to significantly reduce the time and complexity of the changeover process in systems and methods for producing water-soluble pouches comprising a drum assembly.

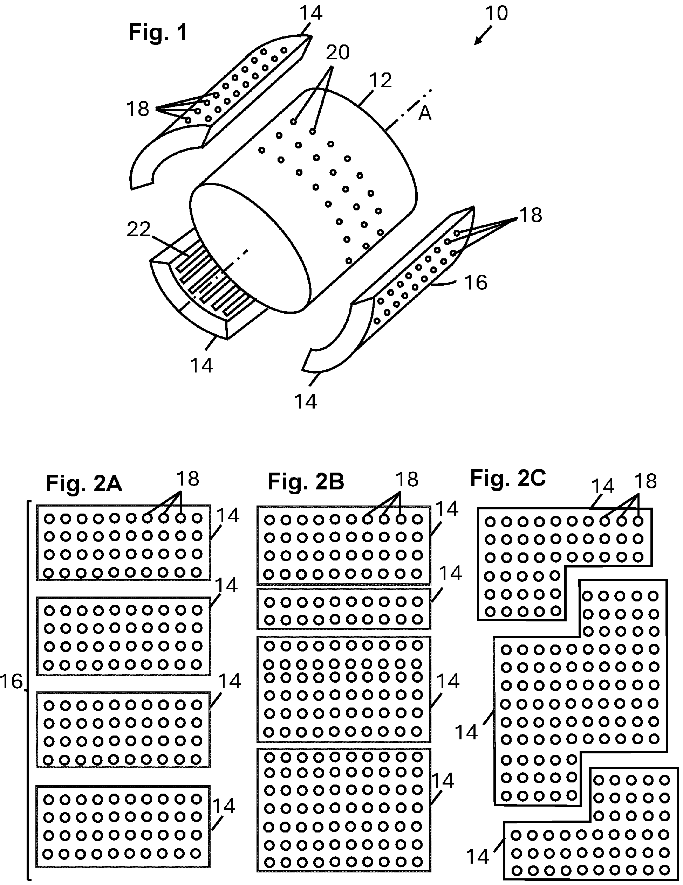

This disclosure therefore provides a drum assembly for manufacturing water-soluble pouches. Figure 1 illustrates an example of such a drum assembly 10. The drum assembly 10 may be part of a wider system for manufacturing water-soluble pouches, such as the example system 100 described in more detail later.

As illustrated in illustrative figure 1, the drum assembly 10 comprises a base drum 12 and a plurality of shell segments 14 removably mounted on the base drum 12.

The base drum 12 is configured to rotate around a central axis A. The base drum 12 can therefore continuously move the water-soluble pouches being produced. The base drum 12 can rotate as part of a continuous manufacturing process, allowing water-soluble film to move along the production line, for example to be consecutively formed, filled and sealed.

The base drum 12 has a cylindrical shape extending in an axial direction, the axial direction being parallel to the central axis A of the base drum 12. Such a cylindrical shape can rotate round the central axis A with reduced or minimal resistance, rendering it mechanically efficient. The cylindrical base drum 12 can also enable other elements of the water-soluble pouch manufacturing system 100, such as filling and sealing units, to be positioned around the base drum 12 in a compact, space efficient manner.

The plurality of shell segments 14 are detachably mounted on the base drum 12. The shell segments 14 may be easily and repeatedly removed or separated from the base drum 12, and subsequently the shell segments 14 may be easily and repeatably attached or repositioned on the base drum 12. The plurality of shell segments 14 can be removable from the base drum 12.

In figure 1, the plurality of shell segments 14 are illustrated spaced apart from the base drum 12, but the shell segments 14 can be mounted on the base drum 12 to surround the base drum 12. When the shell segments 14 are mounted on the base drum 12, the plurality of shell segments 14 collectively form a cylindrical outer molding surface 16 around the circumference of the base drum 12. In other words, the combination of shell segments 14 can completely surround the outer surface of the base drum 12 to form the outer molding surface 16. Alternatively, the plurality of shell segments 14 detachably mounted on the base drum 12 can cover more than 90%, more than 80%, more than 70% or more than 60% of the outer surface of the base drum.

In some examples, not illustrated here, some other shell segments may be fixedly mounted to the base drum 12 or be integral with the base drum 12. The other shell segments may cover the remaining outer surface of the base drum 12, not covered by the removable shell segments 14. Preferably the plurality of shell segments 14 detachably mounted on the base 12 drum define 100% of a complete outer surface of the base drum, and no fixedly mounted other shell segments 14 are present.

The shell segments 14 can for example be removably mounted on the base drum 12 through reversible attachment components, said attachments components being one or more of: a clamping system, an interlocking design such as alignment tabs and grooves, snap fit features or dovetail connections, magnetic mounts, adhesive or friction strips or pads, mechanical fasteners or other supports such as guide rails on the base drum 12 which guide the shell segments 14, and collars placed at the shell segment's 14 edge to restrict movement.

Each shell segment 14 may cover an angular portion of the circumference of the base drum 12 preferably comprised in a range of 20° to 120°, more preferably 30° to 90°, and most preferably around 60°. The angular portion is measured along the circumferential direction of the base drum 12. Shell segments 14 covering such angular portions can be positioned on the base drum 12 by accessing a free area F around the base drum 12, the free area F being an angular portion of the base drum 12 which is unoccupied by other elements of the water-soluble pouch manufacturing system. It is possible to change and replace the shell segments 14 without displacing the other elements of the system. Each shell segment 14 mounted on the base drum 12 can be changed using the free area. The shell segment 14 to be removed can for example be accessed by rotating the base drum 12 so that the shell segment to be removed is within the free area F. The shell segment to be mounted on the base drum12 can for example be fitted by rotating the base drum such that the angular portion to be covered by the shell segment 14 to be mounted is in the free area F.

The number of shell segments 14 and angular portions covered by each shell segment 14 can vary. For example, each shell segment 14 can cover an equal angular portion of 120°, such that the drum assembly 10 comprises three identical shell segments 14 (see figure 1). In other examples, each shell segment 14 can cover an equal angular portion of 90°, such that the drum assembly 10 comprises four identical shell segments 14 (see figure 2A where the shell segments 14 are schematically represented as flat rectangles representing a projection of a shell segment on a plane). In yet other examples, each shell segment 14 can cover a different angular portion, for example one shell segment 14 can cover 60°, another 90°, another 100°, and another 110° (see figure 2B). In yet other examples, each shell segment 14 can cover an irregular angular portion, and the shell segments 14 can be nested into each other (see figure 2C). Any combination of number of shell segments 14 and angular portions covered by each shell segment 14 can be adopted to form the outer molding surface 16 around the base drum 12.

Preferably, each shell segment 14 covers an angular portion of 60° around the circumference of the base drum 12, such that the drum assembly 10 comprises 6 identical drum segments. Such an angular portion enables ease of insertion into the free area around the base drum 12 and enables an efficient changeover of shell segments 14.

Preferably, each shell segment 14 has the shape of an annular sector, which further simplifies positioning and fixing to the base drum 12.

The outer molding surface 16 formed by the collective shell segments 14 comprises a plurality of mold cavities 18. Each mold cavity 18 is configured to define one or more compartments in the water-soluble pouches being produced. Each mold cavity 18 defines the shape, size and volume of the water-soluble pouch being produced.

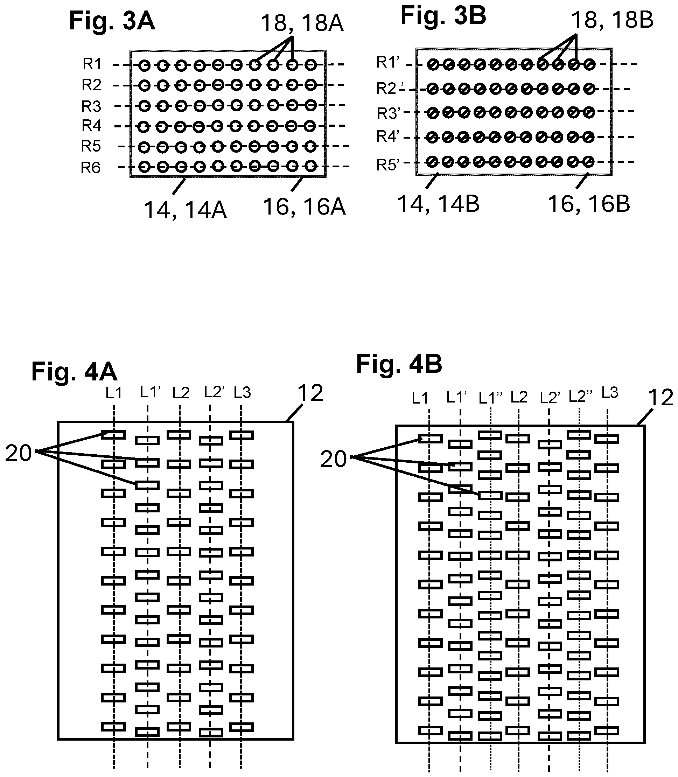

The shape of the mold cavities 18 may be adapted to form between one and eight, preferably between one and five, more preferably between two and five compartments in each of the water-soluble pouches. To achieve this, each mold cavity may for example comprise between one and eight, preferably between one and five distinct recesses, more preferably between two and five distinct recesses, each distinct recess defining a compartment. For example, in figure 3A, each mold cavity 18 comprises a single recess such that the water-soluble pouches produced comprise a single compartment. Alternatively, in figure 3B, each mold cavity 18 comprises two distinct recesses, such that the water-soluble pouches produced comprise two compartments. In another example, each mold cavity 18 comprises three distinct recesses, such that the water-soluble pouches produced comprise three compartments. The shape of each recess is not limited, and each recess may for example be the shape of a polygon, an oval, a circle, a crescent, an annulus, a spiral or any other shape.

The mold cavities 18 may be radially distributed around each shell segment 14. In such a case, an angular spacing between adjacent mold cavities 18 may be comprised between 3° and 20°, preferably between 5° and 15°, preferably still between 10° and 12°. The angular spacing is measured in the circumferential direction of the shell segment 14. Variations in angular spacing enable different sizes of mold cavities 18 to be fitted along the circumferential direction of the shell segment 14. In the example where the drum assembly 10 comprises six shell segments 14, each shell segment 14 covering an angular portion around the circumference of the base drum 12 of 60°, the angular spacing may be 10° such that six mold cavities 18 may be arranged in the circumferential direction of the shell segment 14 (see figure 3A) or may be 12° such that five mold cavities 18 may be arranged in the circumferential direction of the shell segment 14 (see figure 3B).

In some examples, shell segments 14 with different shapes or sizes of mold cavities 18 can be mounted together on the base drum 12. In some examples, mold cavities 18 of different shapes and sizes are provided on the same shell segment 14. Preferably shell segments 14 with the same shape and size of mold cavities are mounted together on the base drum 12.

In the illustrated examples, the mold cavities 18 are arranged in rows, which may be radially distributed around the shell segment 14 (i.e., in the circumferential direction of the shell segment 14 or the machine direction). Each row may extend along the axial direction of the base drum 12 (i.e. parallel to the central axis of the base drum or cross-machine direction). Each shell segment 14 may comprise between 2 and 30 rows of mold cavities 18, preferably between 3 and 20, preferably still between 4 and 12 radially distributed around the shell segment 14. The number of rows radially distributed around the shell segment 14 may be defined by the angular spacing between adjacent mold cavities 18 and the angular portion of the base drum 12 covered by the shell segment 14. In the example of figure 3A, six rows R1-R6 of mold cavities 18 are provided, whereas in the example of figure 3B, five rows R1'-R5' of mold cavities 18 are provided.

The outer molding surface 16 comprising the above-described mold cavities 18 may be formed of an elastomeric material, preferably silicone rubber. Therefore, the outer molding surface 16 can have a certain elasticity and compliance, enabling the water-soluble pouches to be extracted from the mold cavities 18.

In an example, the mold cavities 18 may be provided as individual mold blocks. In other words, each shell segment 14 may comprise a plurality of mold blocks, each mold block comprising a mold cavity 18 comprising one or more recesses for forming an individual water-soluble pouch comprising one or more compartments. The mold blocks may be mounted by press fitting onto a metallic base, thereby forming the shell segment 14. In some examples, each mold block can comprise a plurality of mold cavities 18. The mold blocks may be formed of elastomeric material, thereby forming the elastomeric outer molding surface 16, whereas the base may be metallic to provide rigidity to the shell segment 14. Alternatively, both the mold blocks and the base may be metallic.

Turning to figure 4, the base drum 12 may comprise a plurality of vacuum openings 20. In some embodiments, the compartments may be formed in the water-soluble film in the mold cavities 18 by applying a vacuum sourced from the inside of the base drum 12. The vacuum may be transferred from the inside of the base drum 12 to the shell segments 14 through the vacuum openings 20. In particular, each compartment of each mold cavity may comprise one or more perforations which are connected to the vacuum openings 20. The vacuum openings 20 may have a rectangular shape, elliptical shape, circular shape or any other shape.

In some examples, the vacuum openings 20 are arranged in lanes L1, L2, L3. Adjacent lanes are distributed following each other along the axial direction of the base drum 12, (i.e. follow each other along the machine direction). Each lane comprises a plurality of vacuum openings 20 evenly distributed around the circumference of the base drum 12 (i.e. circumferential direction or machine direction). The vacuum openings 20 of each lane are radially distributed around the base drum 12.

Each vacuum opening 20 in a lane L1, L2, L3 may radially align with a specific row R1-R6 of mold cavities 18 in a shell segment 14. In other words, the angular spacing between vacuum openings 20 of each lane may correspond to the angular spacing between rows of mold cavities 18 of a shell segment 14. Therefore, the vacuum may directly be applied to the mold cavities 18 in the radially aligned row.

In some examples, a plurality of lanes comprise vacuum openings 20 that radially align with a specific row of mold cavities 18. For example, in figures 4A and 4B, lanes L1, L2 and L3 comprise vacuum openings 20 that radially align with rows R1 to R6 of the shell segment 14 illustrated on figure 3A. Lanes L1' and L2' comprise vacuum openings 20 which radially align with rows R1'to R5' of the shell segment 14 illustrated on figure 3B.

Each of the configurations illustrated in figures 4A and 4B are configured to function with different shell segment configurations (in this case with shell segment configurations illustrated in figure 3A or 3B). This allows changing shell segments 14 without changing base drum 12. In some cases not illustrated here, vacuum openings 20 may be provided which are not necessarily customized to a specific shell segment configuration.

In some examples, the number of lanes of vacuum openings 20 comprising vacuum openings 20 that radially align with the specific row of mold cavities 18 is equal to the number of mold cavities 18 in the specific row. Therefore, each vacuum opening 20 can provide a vacuum to a specific mold cavity 18.

In other examples, the number of vacuum openings 20 that radially align with a specific row of mold cavities 18 is inferior to the number of mold cavities 18 in the specific row. In such an example, each shell segment 14 can comprise a vacuum distribution system 22 (see figure 1 for example) configured to distribute the vacuum to each mold cavity 18 in the radially aligned row of mold cavities 18. The vacuum distribution system 22 may for example be channels extending parallel to the axial direction (ie cross-machine direction), the channels connecting mold cavities 18 in a same row of mold cavities 18. The vacuum may be distributed from the vacuum openings 20, through the channels of the vacuum distribution system 22 and then to the one or more perforations of each mold cavity.

In other examples, not illustrated here, vacuum openings 20 in a lane may be configured to transfer the vacuum to two or more rows of mold cavities 18. In such a case, the vacuum distribution system 20 may also comprise channels configured to distribute the vacuum to each mold cavity 18 in the two or more rows of mold cavities 18.

In some examples, lanes of vacuum openings 20 with different angular spacings are arranged in an alternating pattern. The lanes of vacuum openings 20 may be divided into sets, with each set comprising lanes that have the same number of vacuum openings 20 distributed radially around the base drum 12. Lanes of different sets may have different numbers of vacuum openings 20 radially distributed around the base drum 12, resulting in lanes of different sets having different angular spacings between adjacent vacuum openings 20. In other words, the distinction between the lanes of different sets lies in the number of vacuum openings 20 in the lane, which directly affects the angular spacing between adjacent vacuum openings 20 in the lane.

In example figure 4A, lanes L1 to L3 form a first set, with vacuum openings 20 of the lanes of the first set comprising a first number of vacuum openings (i.e. a first angular spacing). Lanes L1' and L2' form a second set, with vacuum openings 20 of the lanes of the second set comprising a second number of vacuum openings (i.e. a second angular spacing). Moving along the axial direction, lane L1 of the first set is followed by lane L 1' of the second set, which is followed by lane L2 of the first set, and so on.

In exemplary figure 4B, lanes L1 to L3 form a first set, with vacuum openings 20 of the lanes of the first set comprising a first number of vacuum openings (i.e. a first angular spacing). Lanes L1' and L2' form a second set, with vacuum openings 20 of the lanes of the second set comprising a second number of vacuum openings (i.e. a second angular spacing). Lanes L1" and L2" form a third set, wherein vacuum openings 20 of the lanes of the third set comprise a third number of vacuum openings (i.e. a third angular spacing).

The number of sets may be chosen depending on the number of shell segments 14 of the drum assembly 10 having mold cavities with different angular spacings. For example, if the shell segments 14 of the drum assembly 10 comprise the shell segments 14 of figure 3A and figure 3B, then the base drum 12 can comprise the first set and the second set, wherein the first set comprises vacuum openings 20 corresponding in angular spacing with the rows of mold cavities 18 of the shell segment 14 of figure 3A and the second set comprises vacuum openings 20 corresponding in angular spacing with the rows of mold cavities 18 of the shell segment 14 of figure 3B. Therefore, the vacuum openings 20 of the first set can radially align with the rows R1-R6 of the shell segments 14 of figure 3A and the vacuum openings 20 of the second set can radially align with the rows R1'-R5' of the shell segment 14 of figure 3B. In the example of figure 4B, a third set is added, corresponding to an example where the drum assembly 10 comprises additional shell segments 14 that have a different angular spacing.

In some examples, the axial distance on the base drum 12 where vacuum openings 20 are provided may be less than two-thirds of the total axial length of the base drum 12, and preferably less than half. This design allows the vacuum source inside the base drum 12 to be more condensed, simplifying the base drum's construction. Preferably, the axial distance over which the vacuum openings 20 are distributed is centralized on the base drum 12. Alternatively, the vacuum openings 20 may be distributed over the entire axial length of the base drum 12.

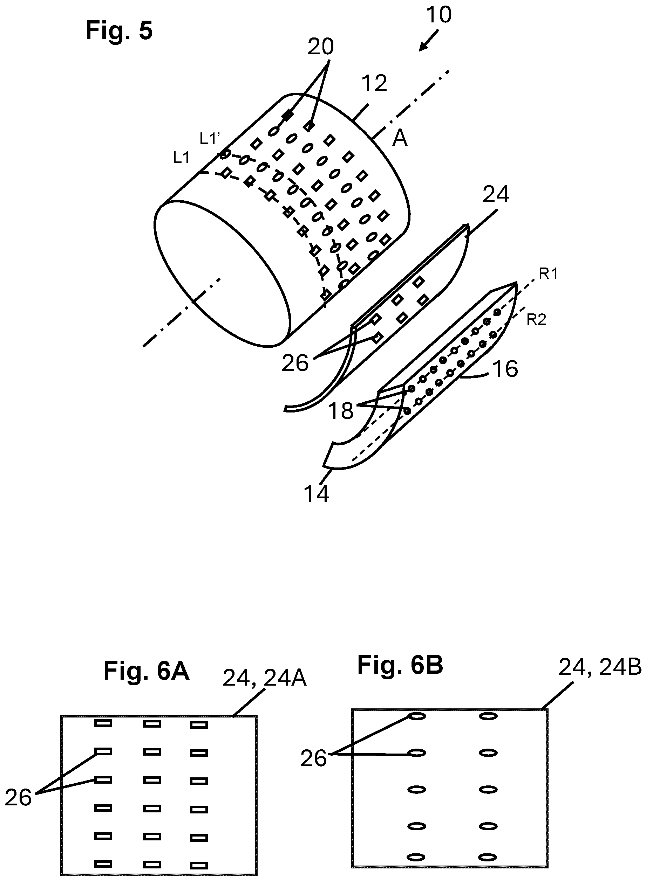

In some examples, the drum assembly 10 may comprise a spacer 24 positioned between the outer molding surface 16 and the base drum 12. In the example illustrated in figure 5, the spacer 24 is a separate part positioned between the shell segment 14 and the base drum 12. In other examples, the spacer 16 may be an integral part of the shell segment 14, for example an inner surface of the shell segment 14.

The spacer 24 may comprise holes 26 configured to be aligned coaxially with the vacuum openings 20 which radially align with the rows of mold cavities 18 mounted on the base drum 12 and to cover any other vacuum openings 20. By coaxially aligned, it is to be understood that the holes 26 both radially and axially align with the vacuum openings 20 (i.e. the holes 26 are superimposed on the vacuum openings 20). The spacer 24 enables the vacuum to be transferred to the radially aligned row of mold cavities 18 but prevents it from being distributed to all the vacuum openings 20. For example, if the shell segment 14 of figure 3A is mounted on the base drum 12, then the spacer 24 comprises holes 26 are aligned coaxially with the vacuum openings 20 of the first set, and the spacer 24 covers the vacuum openings 20 of the second set (Figures 5 and 6A). If the shell segment 14 of figure 3B is mounted on the base drum 12, the spacer 24 comprises holes 26 that are coaxially aligned with the vacuum openings 20 of the second set, and the spacer 24 covers the vacuum openings 20 of the first set (Figure 6B).

In some examples, there is provided a system for transforming a first drum assembly into a second drum assembly 10. In this case, the system may comprise a base drum 12 as described above. The system may also comprise a plurality of first shell segments, the first shell segments 14A for example corresponding to the shell segment 14 illustrated on figure 3A, which collectively define a first outer molding surface 16A. The system may also comprise a plurality of second shell segments 14B, for example corresponding to the shell segment 14 illustrated on figure 3B, which collectively define the second outer molding surface 16B. It is possible to transform the first drum assembly into the second drum assembly by replacing the first shell segments 14A with the second shell segments 14B on the base drum 10. Therefore, it is possible to switch between first mold cavities 18A of the first shell segments 14A to second mold cavities 18B of the second shell segment 14B. The system may be used to manufacture water-soluble pouches of different product lines.

The system may also comprise a first spacer 24A and a second spacer 24B corresponding to the spacer 24 illustrated in figures 6A and 6B, respectively. The first spacer 24A may be used with the first shell segment 14A and the second spacer 24B may be used with the second shell segment 14B.

It should be noted that the system may comprise any number of different shell segments 14, the different shell segments 14 having different mold cavities 18 adapted for producing different water-soluble pouches.

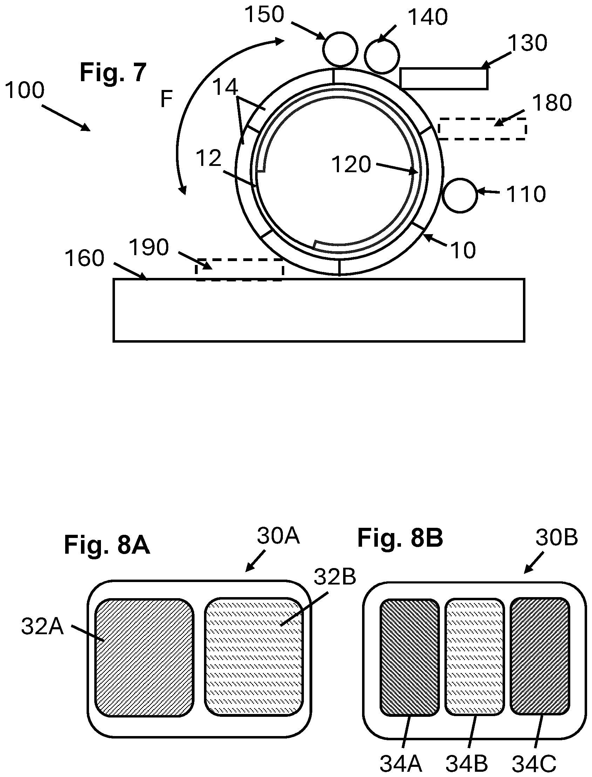

The drum assembly 10 described above may be part of a system for manufacturing water-soluble pouches, such as the system 100 illustrated in figure 7. System 100 may comprise a first film feeding device 110, the drum assembly 10 such as described above, a cavity forming device 120, a pouch filling unit 130, a second film feeding device 140, a sealing unit 150 and an extraction device 160. In some examples, the system 100 may additionally comprise an optional film heating device 180 and/or an optional film wetting device 170 and/or an optional cutting device 190.

The first film feeding device 110 may be configured to feed a first water-soluble film to the drum assembly 10. The first film feeding device 110 may for example comprise rollers to tension the first water-soluble film and position the tensioned film around the outer molding surface of the drum assembly 10.

The cavity forming device 120 may be provided in the base drum 12. The cavity forming device 120 may for example comprise a vacuum source, said vacuum source providing the vacuum to the mold cavities 18, for example through the vacuum openings 20, the vacuum distribution system 22 and/or holes 26 of the spacer 24. The cavity forming device 120 may deform the first water soluble film into the mold cavities 18. The cavity forming device 120 enables the compartments for each water-soluble pouch to be formed in the first water-soluble film.

In some examples, the first film heating device 180 may be configured to assist in deforming the first water-soluble film. The first film heating device 180 can be used in conjunction with the cavity forming device 120 to deform the first water soluble film into mold cavities 18. The film heating device 180 can be selected from contact heating systems such as for example a heating roller and/or non-contact heating systems such as for example an infrared red emitter.

The pouch filling unit 130 may be configured for filling the one or more compartments with one or more compositions. Each compartment formed by the first water-soluble film in a mold cavity 18 (i.e. each recess of each mold cavity) may be filled with a different composition, or the same composition. Examples of compositions are described in more detail later.

The second film feeding device 140 may be configured for feeding a second water soluble film onto the drum assembly 10. The second film feeding device 140 may for example comprise rollers to tension the second water-soluble film and position the tensioned film on top of the filled compartments.

The sealing unit 150 may be configured to seal together the first water soluble film and the second water soluble film, thereby sealing the mold compartments. The sealing unit 150 may for example be at a top area of the base drum 12 to prevent the one or more compositions to leak out from the filled compartments. The sealing unit 150 may for example comprise a heating device, and the first and second water-soluble films may be heat sealed together. The sealing unit 150 may create a web of water-soluble pouches, each water-soluble pouch comprising one or more filled compartments. The sealing unit may also comprise a film wetting unit configured to wet the first water-soluble film and/or the second water-soluble film to improve sealing. The film wetting unit can be a contact wetting unit such as for example by use of a felt roller, or alternatively could be a non-contact wetting system such as for example when using spray sealing technology. Preferably the sealing solvent utilised comprises or consists essentially or consists of water.

In some examples, the cutting device 190 may be configured to cut the web of water-soluble pouches into individual water-soluble pouches while the web of pouches is still attached to the drum assembly 10. Each individual water-soluble pouch comprises the number of compartments defined by the number of distinct recesses in each mold cavity 18. The cutting device 190 may cut the web of water-soluble pouches in the axial direction (i.e. cross-machine direction) and/or in the circumferential direction (i.e. machine direction). Suitable cutting devices 190 include a slitter to cut the web in machine direction, and individual knifes mounted onto a rotating shaft to cut the web in a cross-machine direction. Alternatively, a laser can be used to cut in either or both machine and cross-machine directions. Alternatively, the web of pouches may be cut into individual pouches using similar mechanism as exemplified above after the web is extracted from the drum assembly 10.

The extraction device 160 is configured to extract the web of water-soluble pouches from the mold cavities 18 or to extract individually cut water-soluble pouches from the mold cavities 18. Further, the extraction device 160 may feed the water-soluble pouches to other open or closed water-soluble pouches provided by another pouch making device. The other pouch making device may be a conveyer or another drum assembly. Such an extraction device 160 enables additional water-soluble pouches, formed by the other pouch making device, to be joined to the water-soluble pouches extracted from the drum assembly 10. Therefore, additional compartments may be joined to the water-soluble pouches extracted from the drum assembly 10.

In the system 100 described above, each of the first film feeding device 110, the optional heating device 180, the pouch filing unit 130, the second film-feeding device 140, the sealing unit 150, the optional cutting device 190 and the extraction device 160 are located around the circumference of the drum assembly 10. Following the rotational direction of the base drum 12, the above elements are arranged sequentially to form a continuous production line.

In some examples, the cutting device 190 described above may be positioned downstream of the extraction device 160, following the rotational direction of the base drum 12. Thus, cutting the web of water-soluble pouches into individual water-soluble pouches can occur after the extraction of the pouches from the mold cavities on the base drum 12. In such examples, a rotating anvil may comprise removable shells comprising cavities which correspond in shape to the compartments of the water soluble-pouches. Such removable shells may be detachably mounted to the rotating anvil, facilitating a change in mold cavity shape. The removable shells on the rotating anvil may be similar to the shell segments 14 described above.

The system 100 described above may comprise a free area F around the circumference of the drum assembly 10, the free area F being an angular portion around the base drum 12 which is unoccupied by other elements of the water-soluble pouch manufacturing system 100. The free area F may have an angular range corresponding to the angular portion covered by the shell segments 14 of the drum assembly 10, thereby enabling the shell segments 14 to be removed and inserted into the system 100 without displacing the other elements of the system 100. The base 12 may be rotated to place a shell segment 14 to be removed within the free area, or to access an angular portion of the base drum on which a shell segment is to be mounted.

Figures 8A and 8B illustrate examples of water-soluble pouches manufactured using the above-described system 100. Figures 8A is an example of a water-soluble pouch 30A comprising two compartments 32A, 32B filled with two distinct compositions. Figures 8B is an example of a water-soluble pouch 30B comprising three compartments 34A, 34B, 34C filled with three distinct compositions. The number and shape of compartments in the water-soluble pouch is not limited, and may for example be the shape of a polygon, an oval, a circle, a crescent, a spiral, an annulus or any other shape.

In some examples, overall water-soluble pouches are formed by superimposing water-soluble pouches formed by the drum assembly described above and other water-soluble pouches provided by another pouch making device. In such cases, each overall pouch may have a weight of between 10g and 50g, preferably between 15g and 40g. The water-soluble pouches produced only by the drum assembly described can have a weight comprised between 1g to 10g, preferably between 2g and 8g. In contrast, the water-soluble pouches produced by the other pouch making device can have a weight comprised between 5g and 45g, preferably 10g and 35g.

In some examples the compartment contains a detergent composition. The detergent composition may be a laundry detergent composition, an automatic dishwashing composition, a hard surface cleaning composition, or a combination thereof. The detergent composition may comprise a solid, a liquid or a mixture thereof. The term liquid includes a gel, a solution, a dispersion, a paste, or a mixture thereof. The solid may be a powder. By powder we herein mean that the detergent composition may comprise solid particulates or may be a single homogenous solid. In some examples, the powder detergent composition comprises particles. This means that the powder detergent composition comprises individual solid particles as opposed to the solid being a single homogenous solid. The particles may be free-flowing or may be compacted. A laundry detergent composition can be used in a fabric hand wash operation or may be used in an automatic machine fabric wash operation, for example in an automatic machine fabric wash operation. Example laundry detergent compositions comprise a non-soap surfactant, wherein the non-soap surfactant comprises an anionic non-soap surfactant and a non-ionic surfactant. In some examples, the laundry detergent composition comprises between 10% and 60%, or between 20% and 55% by weight of the laundry detergent composition of the non-soap surfactant. Example weight ratio of non-soap anionic surfactant to nonionic surfactant are from 1:1 to 20:1, from 1:1 to 15:1, from 1.25:1 to 10:1, or from 1.5:1 to 5:1. Example non-soap anionic surfactants comprises linear alkylbenzene sulphonate, alkyl sulphate anionic surfactant or a mixture thereof. Example weight ratio of linear alkylbenzene sulphonate to alkyl sulphate anionic surfactant are from 1:2 to 9:1, from 1:1 to 7:1, from 1:1 to 5:1, or from 1:1 to 4:1. Example linear alkylbenzene sulphonates are C₁₀-C₁₆ alkyl benzene sulfonic acids, or C₁₁-C₁₄ alkyl benzene sulfonic acids. By 'linear', we herein mean the alkyl group is linear. Example alkyl sulphate anionic surfactant may comprise alkoxylated alkyl sulphate or non-alkoxylated alkyl sulphate or a mixture thereof. Example alkoxylated alkyl sulphate anionic surfactant comprise an ethoxylated alkyl sulphate anionic surfactant. Example alkyl sulphate anionic surfactant may comprise an ethoxylated alkyl sulphate anionic surfactant with a mol average degree of ethoxylation from 1 to 5, from 1 to 3, or from 2 to 3. Example alkyl sulphate anionic surfactant may comprise a non-ethoxylated alkyl sulphate and an ethoxylated alkyl sulphate wherein the mol average degree of ethoxylation of the alkyl sulphate anionic surfactant is from 1 to 5, from 1 to 3, or from 2 to 3. Example alkyl fraction of the alkyl sulphate anionic surfactant are derived from fatty alcohols, oxo-synthesized alcohols, Guerbet alcohols, or mixtures thereof. In some examples, the laundry detergent composition comprises between 10% and 50%, between 15% and 45%, between 20% and 40%, or between 30% and 40% by weight of the laundry detergent composition of the non-soap anionic surfactant. In some examples, the non-ionic surfactant is selected from alcohol alkoxylate, an oxo-synthesised alcohol alkoxylate, Guerbet alcohol alkoxylates, alkyl phenol alcohol alkoxylates, or a mixture thereof. In some examples, the laundry detergent composition comprises between 1% and 40%, between 3% and 30%, between 4% and 25%, or between 5% and 20% by weight of the liquid laundry detergent composition of a non-ionic surfactant. In some examples, the laundry detergent composition comprises between 1.5% and 20%, between 2% and 15%, between 3% and 10%, or between 4% and 8% by weight of the laundry detergent composition of soap, in some examples a fatty acid salt, in some examples an amine neutralized fatty acid salt, wherein in some examples the amine is an alkanolamine for example selected from monoethanolamine, diethanolamine, triethanolamine or a mixture thereof, in some examples monoethanolamine. In some examples, the laundry detergent composition is a liquid laundry detergent composition. In some examples the liquid laundry detergent composition comprises less than 15%, or less than 12% by weight of the liquid laundry detergent composition of water. In some examples, the laundry detergent composition is a liquid laundry detergent composition comprising a non-aqueous solvent selected from 1,2-propanediol, dipropylene glycol, tripropyleneglycol, glycerol, sorbitol, polyethylene glycol or a mixture thereof. In some examples, the liquid laundry detergent composition comprises between 10% and 40%, or between 15% and 30% by weight of the liquid laundry detergent composition of the non-aqueous solvent. In some examples, the laundry detergent composition comprises a perfume. In some examples, the laundry detergent composition comprises an adjunct ingredient which can be selected from the group comprising builders including citrate, (encapsulated) enzymes including but not limited to proteases, amylases, lipases, cellulases, mannanases, xyloglucanases, DNA'ses, and mixtures thereof, bleach, bleach catalyst, aesthetic dye, hueing dye, brightener, cleaning polymers including alkoxylated polyamines and polyethyleneimines, soil release polymers, fabric conditioning polymers including Polyquaternium 10 (CathEC), further surfactant including amine oxide and solvent, chelants including aminocarboxylate and aminophosphonate chelants, dye transfer inhibitors, encapsulated perfume, polycarboxylates, structurant, pH trimming agents, antioxidants, preservatives, antibacterial agents including Tinosan HP100, probiotics, and mixtures thereof. In some examples, the laundry detergent composition has a pH between 6 and 10, between 6.5 and 8.9, or between 7 and 8, wherein the pH of the laundry detergent composition is measured as a 10% product concentration in demineralized water at 20°C. When liquid, the laundry detergent composition may be Newtonian or non-Newtonian. In some examples, the liquid laundry detergent composition is non-Newtonian. Without wishing to be bound by theory, a non-Newtonian liquid has properties that differ from those of a Newtonian liquid, more specifically, the viscosity of non-Newtonian liquids is dependent on shear rate, while a Newtonian liquid has a constant viscosity independent of the applied shear rate. The decreased viscosity upon shear application for non-Newtonian liquids is thought to further facilitate liquid detergent dissolution. The liquid laundry detergent composition described herein can have any suitable viscosity depending on factors such as formulated ingredients and purpose of the composition.

The water soluble pouch 30A, 30B comprises at least one water-soluble film. The water-soluble film is sealed such that the composition does not leak out of the compartment during storage. However, upon addition of the water-soluble pouch to water, the water-soluble film dissolves and releases the contents of the internal compartment into the wash liquor. Example water soluble film materials comprise polymeric materials. The film material can, for example, be obtained by casting, blow-moulding, extrusion or blown extrusion of the polymeric material. In some examples, the water-soluble film comprises polyvinyl alcohol homopolymer or polyvinyl alcohol copolymer, for example a blend of polyvinylalcohol homopolymers and/or polyvinylalcohol copolymers, wherein the polyvinyl alcohol copolymers preferably are selected from sulphonated and carboxylated anionic polyvinylalcohol copolymers especially carboxylated anionic polyvinylalcohol copolymers, for example a blend of a polyvinylalcohol homopolymer and a carboxylated anionic polyvinylalcohol copolymer, alternatively a blend of two or more preferably two polyvinyl alcohol homopolymers. In another example the water-soluble film comprises a single polyvinyl alcohol polymer, more preferably a carboxylated anionic polyvinylalcohol copolymer. In some examples water soluble films are those supplied by Monosol under the trade references M8630, M8900, M8779, M8310. In some examples the film may be opaque, transparent or translucent. The film may comprise a printed area. The area of print may be achieved using techniques such as flexographic printing or inkjet printing. The film may comprise an aversive agent, for example a bittering agent. Suitable bittering agents include, but are not limited to, naringin, sucrose octaacetate, quinine hydrochloride, denatonium benzoate, or mixtures thereof. Example levels of aversive agent include, but are not limited to, 1 to 5000ppm, 100 to 2500ppm, or 250 to 2000ppm. The water-soluble film or water-soluble pouch or both may be coated with a lubricating agent. In some examples, the lubricating agent is selected from talc, zinc oxide, silicas, siloxanes, zeolites, silicic acid, alumina, sodium sulphate, potassium sulphate, calcium carbonate, magnesium carbonate, sodium citrate, sodium tripolyphosphate, potassium citrate, potassium tripolyphosphate, calcium stearate, zinc stearate, magnesium stearate, starch, modified starches, clay, kaolin, gypsum, cyclodextrins or mixtures thereof.

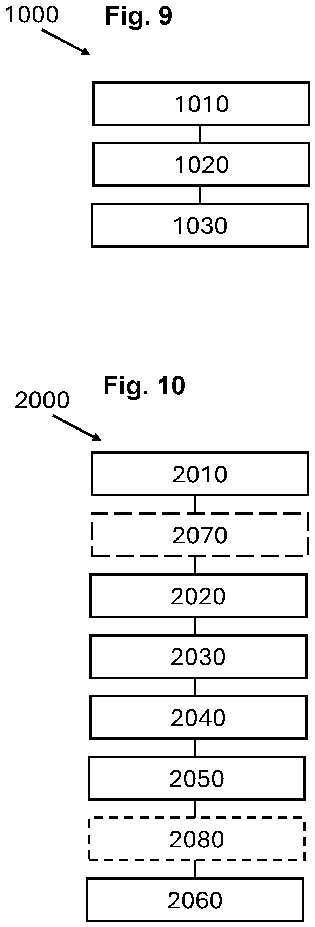

Figure 9 illustrates an example of a method 1000 for transforming a first drum assembly as described above into a second drum assembly as described above. The method 1000 may comprise providing 1010 a system for transforming a first drum assembly as described above into a second drum assembly as described above, removing 1020 the first shell segments 14A from the base drum 12 and attaching 1030 the second shell segments 14B to the base drum 12. Removing 1020 and attaching 1030 may comprise respectively extracting and inserting the first and second shell segments 14A, 14B from the free area F around the base drum 12. Removing 1020 may further comprise releasing the reversable attachment components between the first shell segments 14A and the base drum 12, and attaching 1030 may comprise securing the reversable attachments components between the second shell segments 14B and the base drum 12. It should be noted that the first and second shell segments 14A, 14B are interchangeable in the present method 1000.

Figure 10 illustrates a method 2000 for producing water-soluble pouches. The method may comprise providing a first drum assembly or a second drum assembly described in figure 7 using the method 1000, feeding 2010 a first water-soluble film, deforming 2020 the water-soluble film to define the mold compartments, filling 2030 the mold compartments, feeding 2040 a second water-soluble film, sealing 2050 the filled mold compartments with the second water-soluble film, extracting 2060 the water-soluble pouches. The method may optionally comprise further heating 2070 the first water soluble film and/or cutting a web of water-soluble pouches to form individual water-soluble pouches. The steps of feeding, deforming, heating, filling, sealing cutting and extracting may be achieved by the components of the system 100 as described above, in particular during rotation of the base drum 12. The steps of feeding, deforming, heating, filling, sealing cutting and extracting may be carried out continuously of intermittently, preferably the steps are continuous to improve productivity and efficiency.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

## Claims

1. A drum assembly (10) for manufacturing water-soluble pouches, the drum assembly (10) comprising:
- a base drum (12) configured to rotate around a central axis (A), the base drum (12) having a cylindrical shape extending in an axial direction; and
- a plurality of shell segments (14), each shell segment (14) being detachably mounted to
the base drum (12); the shell segments (14) collectively forming a cylindrical outer molding surface (16) around the circumference of the base drum (12);
wherein the outer molding surface (16) comprises a plurality mold cavities (18), each mold cavity (18) being configured to define one or more compartments in the water-soluble pouches, and
wherein each shell segment (14) covers an angular portion of the circumference of the base drum (12) preferably comprised in a range of 20° to 120°, more preferably 30° to 90°, and most preferably around 60°.

2. The drum assembly (10) of claim 1, wherein each shell segment (14) has the shape of an annular sector.

3. The drum assembly (10) of any of claims 1 to 2, wherein the outer molding surface (16) is made from an elastomeric material, preferably the outer molding surface (16) is made of silicone.

4. The drum assembly (10) of any of claims 1 to 3, wherein the mold cavities (18) of each shell segment (14) are arranged in rows, each row extending along the axial direction of the base drum (12), and the base drum (12) comprises a plurality of vacuum openings (20) arranged in staggered lanes, the lanes being distributed along the axial direction of the base drum (12), the lanes alternating between:
- a first set, wherein each lane of the first set comprises a first number of vacuum openings (20) evenly distributed around the circumference of the base drum (12), and
- a second set, wherein each lane of the second set comprises a second number of vacuum openings (20) evenly distributed around the circumference of the base drum (12), the first number and the second number being different,
- optionally, any number of subsequent sets, wherein each subsequent set comprises lanes with a distinct number of vacuum openings (20) evenly distributed around the circumference of the base drum (12);
wherein the rows of mold cavities (18) radially align with the vacuum openings (20) of the first set or the vacuum openings (20) of the second set, or, optionally, with the vacuum openings (20) of any subsequent set.

5. The drum assembly (10) of claim 4, further comprising a spacer (24) arranged between the base drum (12) and the outer molding surface (16), wherein the spacer (24) comprises holes (26) configured to
- be aligned coaxially with the vacuum openings (20) of the first set and cover the vacuum openings (20) of the second set and any optional subsequent set if the rows of mold cavities (18) radially align with the vacuum openings (20) of the first set, or
- be aligned coaxially with the vacuum openings (20) of the second set and cover the vacuum opening (20) of the first set and any optional subsequent set if the rows of mold cavities (18) radially align with the vacuum openings (20) of the second set,
- optionally, be aligned coaxially with the vacuum openings (20) of a specific subsequent set and cover the vacuum openings (20) of the first set, the second set and any further optional remaining subsequent set if the rows of mold cavities (18) radially align with the specific subsequent set.

6. The drum assembly (10) of claim 5, wherein the spacer (24) is an integral part of the shell segment (14).

7. The drum assembly (10) of claims 4 to 6, wherein the number of lanes of vacuum openings (20) distributed along the axial direction is inferior to the number of mold cavities (18) in a radially aligned row of mold cavities (18), and each shell segment (14) comprises a vacuum distribution system (22) configured to distribute the vacuum to all the mold cavities (18) of the radially aligned row of mold cavities (18).

8. A system for transforming a first drum assembly into a second drum assembly for manufacturing water-soluble pouches comprising:
- a base drum (12) configured to rotate around a central axis (A), the base drum (12) having a cylindrical shape extending in an axial direction,
- a plurality of first shell segments (14A), each first shell segment (14A) being reversibly attachable to the base drum (12), the first shell segments (14A) being configured to collectively form a first outer molding surface (16A) around the circumference of the base drum (12), wherein the first outer molding surface (16A) comprises a plurality of first mold cavities (18A), each first mold cavity (18A) being configured to define one or more first compartments in the water-soluble pouch (30A), wherein each first shell segment (14A) is configured to cover an angular portion of the circumference of the base drum (12) preferably comprised in a range of 20° to 120°, preferably 30° to 90°, and more preferably around 60°; and
- a plurality of second shell segments (14B), each second shell segment (14B) being reversibly attachable to the base drum (12); the second shell segments (14B) being configured to collectively form a second outer molding surface (16B) around the circumference of the base drum (12), wherein the second outer molding surface (16B) comprises a plurality of second mold cavities (18B), each second mold cavity (18B) being configured to one or more second compartments in the water-soluble pouch (30B), wherein each second shell segment (14B) is configured to cover an angular portion of the circumference of the base drum preferably comprised in a range of 20° to 120°, preferably 30° to 90°, and more preferably around 60°; and,
wherein a number of first mold cavities (18A) is different from a number of second mold cavities (18B) and/or a shape of the first mold cavities (18A) is different from a shape of the second mold cavities (18B) and/or the size of the first mold cavities (18A) is different from a size of the second mold cavities (18B).

9. The system of claim 8, wherein the first mold cavities (18A) of the first shell segments (14A) are arranged in a first number of rows extending along the axial direction of the base drum (12) and the second mold cavities (18B) of the second shell segments (14B) are arranged in a second number of rows extending along the axial direction of the base drum (12), the first number of rows being different from the second number of rows; and wherein the base drum (12) comprises a plurality of vacuum openings (20) arranged in staggered lanes, the lanes being distributed along the axial direction of the base drum (12), the lanes alternating between:
- a first set wherein each lane of the first set comprises a first number of vacuum openings (20) evenly distributed around the circumference of the base drum (12), and
- a second set wherein each lane of the second set comprises a second number of vacuum openings (20) evenly distributed around the circumference of the base drum (12), the first number and the second number being different;
wherein the rows of first mold cavities (18A) radially align with the vacuum openings (20) of the first set and the rows of second mold cavities (18B) radially align with the vacuum openings (20) of the second set.

10. The system of claim 9, further comprising:
- a first spacer (24A) configured to be positioned between the base drum (12) and the first outer molding surface (16A), the first spacer (24A) comprising holes (26) configured to be aligned coaxially with the vacuum openings (20) of the first set and configured to cover the vacuum openings (20) of the second set; and
- a second spacer (24B) configured to be positioned between the base drum (12) and the second outer molding surface (16B), the second spacer (26B) comprising holes (26) to be aligned coaxially with the vacuum openings (20) of the second set and configured to cover the vacuum openings (20) of the first set.

11. The system of claim 10, wherein the first spacer (24A) is an integral part of the first shell segment (14A) and the second spacer (24B) is an integral part of the second shell segment (14B).

12. The system of claims 9 to 11, wherein the number of lanes of vacuum openings (20) distributed along the axial direction within the first and/or the second set is inferior to the respective number of first and/or second mold cavities (18A, 18B) in a radially aligned row of first mold cavities and/or of second mold cavities (18A, 18B), and each of the first and/or second shell segments (14A, 14B) comprise a vacuum distribution system (22) configured to distribute the vacuum to all the first and/or second mold cavities (18A, 18B) of the radially aligned row of first and/or second mold cavities (18A, 18B).

13. A method for transforming a first drum assembly into a second drum assembly for producing water-soluble pouches, comprising:
- providing a system according to any of claims 8 to 12,
- removing the first shell segments (14A) from the base drum (12);
- attaching the second shell segments (14B) on the base drum (12).

14. The method according to claim 13, wherein removing the first shell segments (14A) and attaching the second shell segments (14B) is achieved by extracting and inserting respectively the first shell segments (14A) and the second shell segments (14B) from a free area around the circumference of the base drum (12), the free area extending between at least two of: a first film feeding device (110), a first film heating device (180), a pouch-filling unit (130), a second film feeding device (140), a sealing unit ( 150), a cutting device (190), and an extraction device (160) arranged around the circumference of the base drum (12).

15. A system (100) for producing a water-soluble pouch comprising:
- a first film feeding device (110) configured for feeding a first water-soluble film;
- optionally, a first film heating device (180) configured to heat the first water-soluble film fed from the first film feeding device (110);
- a drum assembly (10) according to any of claims 1 to 7 configured to receive the first-water soluble film from the first film feeding device (110);
- a cavity forming device (120) provided inside the drum assembly (10) and configured to deform the first water-soluble film into the one or more mold cavities (18);
- a pouch filling unit (130) configured to fill the one or more compartments formed by the water-soluble film in the mold cavities (18) with one or more compositions;
- a second film feeding device (140) configured for feeding a second water-soluble film;
- a sealing unit (150) configured to seal the one or more filled mold compartments with the second water-soluble film;
- optionally, a cutting device (190) configured to cut a web of water-soluble pouches into a plurality of individual water soluble pouches;
- optionally a film wetting unit (170);
- an extraction device (160) configured to extract a web water-soluble pouches or individually cut water-soluble pouches from the drum assembly, wherein, optionally, the extraction device (160) is also configured to combine the water-soluble pouches with other open or closed water-soluble pouches fed from a different pouch making device.

16. The system (100) of claim 15, wherein the first film feeding device (110), the pouch filling unit (130), the second film feeding device (140), the sealing unit (150) and the extraction device (160) are positioned around the circumference of the base drum (12), and, optionally, the first film heating device (180), the optional film wetting device (170) and the cutting device (190) are positioned around the circumference of the base drum (12).

17. A method for producing water-soluble pouches, comprising:
- providing a first drum assembly or a second drum assembly using the method according to claims 13 or 14;
- feeding a first water-soluble film from a first film feeding device (110) to the outer molding surface;
- optionally, heating the first water-soluble film;
- deforming the water-soluble film into the mold cavities (18) of the shell segments (14);
- filling the mold compartments defined by the water-soluble film in the mold cavities (18) of the shell segments (14) with one or more compositions;
- feeding a second water-soluble film from a second film feeding device to the outer molding surface (16) in order to seal the filled mold compartments;
- sealing the filled mold compartments with the second water-soluble film;
- optionally, cutting a web of water-soluble pouches into individual water soluble pouches;
- optionally wetting the web of water-soluble pouches; and
- extracting a web of water-soluble pouches or individual water soluble pouches from the drum assembly (10), wherein extracting optionally comprises combining the water-soluble pouches with other open or closed water-soluble pouches travelling on a different pouch making device;
wherein attaching, feeding, deforming, filling, sealing and extracting is achieved by rotating the base drum (12).

18. A water-soluble pouch (30A; 30B) produced by the method of claim 17.
